## Europäisches Patentamt
## European Patent Office
## Office européen des brevets

(11) Veröffentlichungsnummer : **0 380 192 B1**

(12)

# EUROPÄISCHE PATENTSCHRIFT

(45) Veröffentlichungstag der Patentschrift :
**22.04.92 Patentblatt 92/17**

(51) Int. Cl.[5] : **C01B 3/38**, B01J 8/06,
B01J 19/24

(21) Anmeldenummer : **90250017.2**

(22) Anmeldetag : **22.01.90**

(54) **Verfahren zur indirekten Beheizung eines Prozessgasstroms in einem Reaktionsraum für eine endotherme Reaktion und Vorrichtung zu dessen Durchführung.**

(30) Priorität : **24.01.89 IT 4757089**

(43) Veröffentlichungstag der Anmeldung :
**01.08.90 Patentblatt 90/31**

(45) Bekanntmachung des Hinweises auf die
Patenterteilung :
**22.04.92 Patentblatt 92/17**

(84) Benannte Vertragsstaaten :
**BE DE DK FR GB IT NL**

(56) Entgegenhaltungen :
**EP-A- 0 194 067
EP-A- 0 195 688
FR-A- 1 327 210**

(73) Patentinhaber : **MANNESMANN
Aktiengesellschaft
Mannesmannufer 2
W-4000 Düsseldorf 1 (DE)**
Patentinhaber : **K.T.I. Group B.V.
Bredewater 26, Box 86
NL-2700 AB Zoetermeer (NL)**

(72) Erfinder : **Bezzeccheri, Maurizio Dr.
Via Carlo Alberto I-Irav. N9
I-80045 Pompei (NA) (IT)**
Erfinder : **Mosca, Lorena
Via Veglia 10
I-00141 Rom (IT)**
Erfinder : **Giacobbe, Francesco
Via Giulio AR. Sartorio 147
I-00147 Rom (IT)**

(74) Vertreter : **Meissner, Peter E., Dipl.-Ing. et al
Patentanwaltsbüro Meissner & Meissner,
Herbertstrasse 22
W-1000 Berlin 33 (DE)**

EP 0 380 192 B1

**Beschreibung**

Die Erfindung betrifft ein Verfahren zur indirekten Beheizung eines Prozeßgasstroms in einem Reaktionsraum für eine endotherme, insbesondere katalytische Reaktion gemäß dem Oberbegriff des Patentanspruchs 1 und eine Vorrichtung zur Durchführung dieses Verfahrens.

Ein mögliches Einsatzgebiet der Erfindung stellt die katalytische Dampfreformierung von Kohlenwasserstoffen zur Herstellung eines wasserstoffreichen Gases dar. Als Prozeßgas dient ein Gemisch aus Wasserdampf, Kohlenwasserstoff und/oder Kohlendioxyd. Dieses Gasgemisch wird mit Temperaturen von etwa 400 bis 600 Grad C bei Drücken von bis zu 4 MPa einem Reaktionsraum, der aus mehreren katalysatorgefüllten Rohren bestehen kann, zugeführt und dort auf ca. 750 bis 900 Grad C aufgeheizt. Über dem Katalysator reagiert dieses Gasgemisch dann endotherm zu einem wasserstoffreichen Gas mit Anteilen von Kohlenmonoxyd, Kohlendioxyd und Überschüssen an Wasserdampf und Kohlenwasserstoff.

Der Wasserstoffgehalt des erzeugten Produktgases hängt u.a. vom Überschuß des verwendeten Wasserdampfes sowie von der Temperatur und dem Druck im katalysatorgefüllten Rohr ab. Ein Ansteigen des Wasserdampfüberschusses und der Temperatur im katalysatorgefüllten Rohr bewirken eine Zunahme der Wasserstoffgewinnung, während eine Druckerhöhung eine Abnahme derselben zur Folge hat.

Aus der EP 0 194 067 B1 ist eine Vorrichtung zur Durchführung einer endothermen katalytischen Reaktion eines Prozeßgasstroms bekannt. Diese weist ein Gehäuse mit einem oder mehreren darin parallel zueinander angeordneten katalysatorgefüllten Rohren mit je einem blinden Ende auf. Im Gehäuse sind Mittel für die Zuführung und Abführung eines Rauchgases zur Beheizung der äußeren Oberfläche der katalysatorgefüllten Rohre, durch deren Inneres der Prozeßgasstrom unter Wärmeaufnahme hindurchgeführt wird, vorgesehen. Die katalysatorgefüllten Rohre sind jeweils von einem rohrförmigen Mantel, der mit dem Rohr einen Ringspalt bildet, umgeben. Der Mantel erstreckt sich über den größeren Teil der Länge des katalysatorgefüllten Rohres. Die Zuleitung für das Rauchgas ist unmittelbar auf das blinde Ende des katalysatorgefüllten Rohres gerichtet. Die dadurch bewirkte direkte Anströmung des katalysatorgefüllten Rohres durch das heiße Rauchgas erweist sich als nachteilig, da hierdurch die thermische Belastung des blinden Endes des katalysatorgefüllten Rohres sehr hoch ist. An kritischen Stellen entstehen im Mantel des katalysatorgefüllten Rohres so hohe Temperaturen, daß es nach relativ kurzer Zeit beschädigt ist und ausgewechselt werden muß, wenn man nicht vorher für eine entsprechende Abkühlung des Rauchgases sorgt. Dies könnte beispielsweise durch einen vorgeschalteten Wärmetauscher oder durch Vermischung mit bereits abgekühltem Rauchgas geschehen. Beide Maßnahmen erfordern entsprechenden zusätzlichen baulichen Aufwand.

Zur Abmilderung der thermischen Belastung der katalysatorgefüllten Rohre ist es bekannt, diese auf ihrer Außenseite mit einer keramischen Schutzummantelung im Bereich der direkten Beaufschlagung mit dem heißen Rauchgas zu versehen. Ein Nachteil derartiger Schutzummantelungen liegt in der Anfälligkeit gegenüber Wärmedehnungsspannungen, die zu Beschädigungen der Keramik und dann lediglich mit zeitlicher Verzögerung auch zu Beschädigungen der katalysatorgefüllten Rohre selbst führen.

In der auf die Anmelder zurückgehenden, nicht vorveröffentlichten Patentanmeldung EP-A 369 556 wird zur Lösung der Überhitzungsproblematik der Wände eines Reaktionsraums vorgeschlagen, das zur Beheizung der Reaktionsraumwände verwendete heiße Rauchgas zunächst an einer Barriere aus einem temperaturbeständigen und gut wärmeleitenden Material entlangzuführen und dabei Wärme an diese Barriere abgeben zu lassen, bis es eine für die Reaktionsraumwände unschädliche Temperatur erreicht hat. Erst dann wird der Strom des Rauchgases umgelenkt und in entgegengesetzter Richtung auf der anderen Seite der Barriere weitergeführt, wobei das bereits etwas abgekühlte Rauchgas mit den Wänden des Reaktionsraums in direkten Kontakt tritt und Wärme an diese Wände abgibt. Da das Rauchgas jedoch gleichzeitig von der aufgeheizten Barriere Wärme aufnimmt, wird seine Temperatur trotz der Wärmeabgabe an den Reaktionsraum im Bereich der Barriere, die sich nur über einen Teil der Länge des Reaktionsraums erstreckt, nahezu konstant gehalten. Außerhalb des Bereichs der Barriere kühlt das Rauchgas auf seinem Weg entlang des Reaktionsraums relativ rasch ab, so daß die Temperatur im Reaktionsraum ein entsprechendes Gefälle aufweist.

Während in der EP-A 369 556 lediglich die thermische Schädigung der Wände des Reaktionsraums vermieden werden sollte, liegt der vorliegenden Erfindung die Aufgabe zugrunde, die thermischen Bedingungen für eine endotherme Reaktion, insbesondere eine katalytische Reaktion dahingehend zu optimieren, daß im gesamten Reaktionsraum weitgehend isotherme Verhältnisse vorliegen.

Das bedeutet, daß der Reaktionsraum nicht mehr wie bisher üblich ein starkes Temperaturgefälle aufweisen soll, bei dem die gewünschte endotherme Reaktion in den verschiedenen Bereichen mit entsprechend stark unterschiedlicher Intensität abläuft, sondern daß eine bessere Nutzung des Reaktionsraums dadurch erreicht werden soll, daß nahezu überall etwa gleichgute Reaktionsbedingungen in thermischer Hinsicht geschaffen werden.

Gelöst wird diese Aufgabe durch ein Verfahren, das die Merkmale des Patentanspruchs 1 aufweist und durch die kennzeichnenden Merkmale des Patentanspruchs 2 in vorteilhafter Weise weitergebildet wird. Eine Vorrichtung zur Durchführung dieses Verfahrens ist im Patentanspruch 3 angegeben. Die kennzeichnenden Merkmale der Unteransprüche 4 bis 11 stellen vorteilhafte Ausgestaltungen der erfindungsgemäßen Vorrichtung dar.

Die Erfindung macht sich die Erkenntnisse aus der EP-A 369 556 zunutze und erweitert deren Anwendungsbereich beträchtlich, indem sie vorsieht, daß der indirekte Wärmeaustausch zwischen den in entgegengesetzter Richtung auf gegenüberliegenden Seiten einer wärmeleitenden Barriere entlanggeführten Strömungsabschnitten ein und desselben Rauchgasstromes über die gesamte axiale Länge des Reaktionsraumes hinweg aufrechterhalten wird. Dadurch wird erreicht, daß die Wärmeabgabe in dem Strömungsabschnitt des Rauchgases, der den Wänden des Reaktionsraums zugekehrt ist, zu einem Teil ausgeglichen werden kann durch die Wärmeaufnahme, die von dem entgegengerichteten Strömungsabschnitt des Rauchgases aus durch die wärmeleitende Barriere hindurch erfolgen kann. Die Temperatur des an den Wänden des Reaktionsraums in direktem Kontakt vorbeigeführten Rauchgases vermindert sich daher trotz der durch Konvektion erfolgenden ständigen Wärmeabgabe an den Reaktionsraum vergleichsweise langsam.

Andererseits findet ein Wärmetausch zwischen der Barriere und den Wänden des Reaktionsraums infolge Wärmestrahlung statt. Über die axiale Länge des Reaktionsraums verhält sich die Intensität dieser Wärmestrahlung tendenziell umgekehrt wie die Rauchgastemperatur in dem den Reaktionsraumwänden zugekehrten Strömungsabschnitt. Dies hat zur Folge, daß die Wände des Reaktionsraumes, durch die hindurch der Wärmetausch erfolgt, sich nahezu auf die gleiche Temperatur erwärmen und sich auch im Reaktionsraum trotz der stattfindenden endothermen Reaktionsvorgänge überall eine etwa gleichhohe Temperatur ausbildet, wobei diese auf eine optimale Höhe (in Abhängigkeit von der Art der Reaktion) eingestellt werden kann.

Voraussetzung hierfür ist allerdings, daß der in den Reaktionsraum eingeführte Prozeßgasstrom bereits etwa auf Reaktionstemperatur vorgewärmt wurde. Anderenfalls entsteht selbstverständlich eine Zone geringerer Temperatur im Reaktionsraum, innerhalb der sich die Aufheizung auf Reaktionstemperatur vollzieht. Die Vorwärmung des Prozeßgases kann unter Ausnutzung der in dem abgeleiteten abgekühlten Rauchgas noch enthaltenen Wärme vorgenommen werden.

Die Erfindung ermöglicht es, einen Reaktionsraum gegebener Größe optimal zu nutzen, indem die Temperatur nahezu überall auf einem konstanten Maximalwert gehalten wird. Dieser Maximalwert wird so gewählt, daß die zulässigen thermischen Beanspruchungen der für den Reaktor verwendeten Werkstoffe nicht überschritten werden und gleichzeitig für die jeweilige chemische Reaktion möglichst günstige thermische Bedingungen vorliegen.

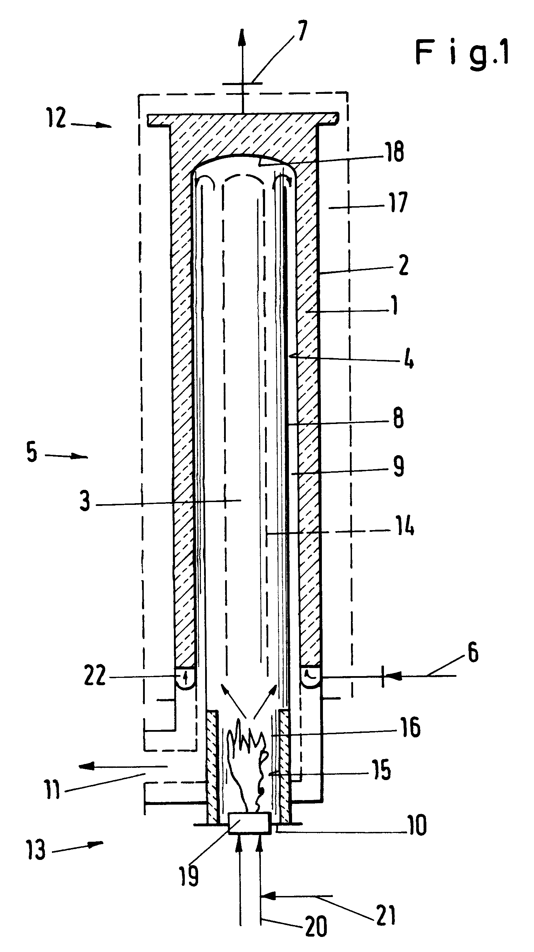

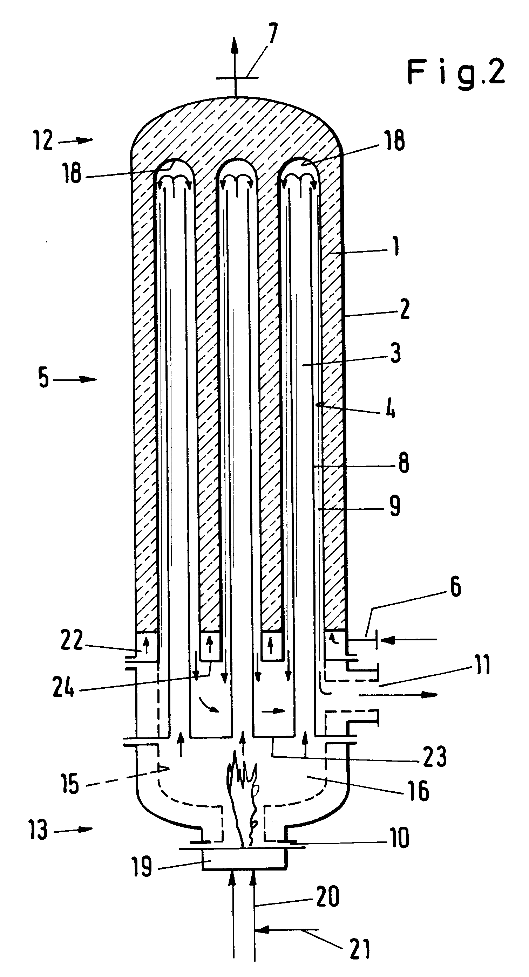

Im folgenden wird die Erfindung anhand der in den Figuren 1 und 2 dargestellten Ausführungsbeispiele näher beschrieben. Es zeigen:

Figur 1 einen erfindungsgemäßen Reaktor mit einer zylindrischen Aussparung im Reaktionsraum,

Figur 2 einen erfindungsgemäßen Reaktor mit mehreren zylindrischen Aussparungen im Reaktionsraum.

Der in Figur 1 dargestellte Reaktor 5 hat einen Reaktionsraum 1 mit einem äußeren zylinderförmigen Mantel 2. Der Reaktionsraum 1 ist im wesentlichen ringförmig ausgebildet, da er innen eine zylinderförmige Aussparung 3 aufweist, die von einer inneren Wand 4 aus einem gut wärmeleitenden Material begrenzt ist.

In den Reaktor 5, der in stehender Bauart ausgeführt ist, kann unten über die Zuleitung 6 ein vorgewärmtes Prozeßgas (z.B. Äthylbenzoldämpfe) eingeleitet werden. Dieses Prozeßgas strömt zunächst in einen ringförmigen Verteilraum 22 und von dort nach oben in den eigentlichen Reaktionsraum 1, der z.B. mit einem Katalysator gefüllt ist. Nach Durchströmen der Katalysatormasse ist das Prozeßgas in ein Produktgas (z.B. Styrol) umgewandelt und tritt am oberen Ende 12 des Reaktors 5 durch die Produktgasableitung 7 aus dem Reaktionsraum 1 aus. Um die endotherme Reaktion im Reaktionsraum 1 in Gang zu halten, muß dieser mittels eines heißen Rauchgases beheizt werden. Hierzu ist am unteren Ende 13 des Reaktors 5 eine Rauchgaszuleitung 10 vorgesehen, durch die heiße Rauchgase unmittelbar in die zylinderförmige Aussparung 3 geleitet werden. Mit Vorteil wird die Rauchgaszuleitung 10 als Brennkammer 16 mit feuerfesten Wänden 15 ausgeführt, so daß die Rauchgaserzeugung direkt in dem Reaktor 5 erfolgen kann.

Hierzu weist die Brennkammer 16 am unteren Ende einen Brenner 19 auf, dem über die Leitungen 20 und 21 Brennstoff und ein sauerstoffhaltiges Gas zugeführt werden können. Im Inneren der Aussparung 3 schließt sich an die Rauchgaszuleitung 10 unmittelbar eine als rohrförmiger Körper 8 aus gut wärmeleitendem Material ausgebildete Barriere an. Dieser gasdichte rohrförmige Körper 8, der sich bis nahe an das obere Ende der zylinderförmigen Aussparung 3 erstreckt, schirmt die innere Wand 4 des Reaktionsraums 1 zunächst vor einem direkten Kontakt mit dem heißen Rauchgas ab und bildet mit der Wand 4 einen Ringspalt 9. Dieser Ringspalt 9 ist oben zum Inneren der zylinderförmigen Aussparung 3 offen. Das von dem Brenner 19 erzeugte heiße Rauchgas strömt daher zunächst an dem rohrförmigen Körper 8 entlang nach oben, wird am oberen Ende des rohrförmigen Körpers 8 nach außen umgelenkt und strömt schließlich in umgekehrter Richtung an der Außenseite des rohrförmigen Körpers 8 durch den Ringspalt 9 nach unten, wo es durch die am unteren Ende 13 befind-

EP 0 380 192 B1

liche Rauchgasableitung 11 abgeleitet werden kann.

Das durch den Ringspalt 9 abwärts strömende Rauchgas gibt ständig Wärme über die Wand 4 an das im Gegenstrom durch den Reaktionsraum 1 strömende Prozeßgas ab und ermöglicht dort die endotherme Reaktion. Da gleichzeitig auf der Innenseite des rohrförmigen Körpers 8 heißes Rauchgas entlangströmt und Wärme an den rohrförmigen Körper 8 abgibt, wird ein Teil dieser Wärme auf den abwärtsströmenden Strömungsabschnitt des Rauchgasstromes übertragen, so daß dessen Temperatur trotz der fortlaufenden Wärmeabgabe an das Prozeßgas vergleichsweise langsam abnimmt.

Das Ausmaß des Wärmeaustauschs zwischen den beiden Strömungsabschnitten des Rauchgasstromes sowie zwischen dem abwärtsströmenden Rauchgasstrom und dem Prozeßgasstrom läßt sich durch die Wahl des Durchmessers des rohrförmigen Körpers beeinflussen, da ein größerer Durchmesser bei sonst gleichen Bedingungen eine Verringerung des Ringspaltes 9 und somit eine Erhöhung der Strömungsgeschwindigkeit im abwärts gerichteten Strömungsabschnitt des Rauchgases bewirkt, so daß das Rauchgas infolge des intensivierten Wärmeaustauschs (Konvektion) mit der inneren Wand 4 des Reaktionsraums 1 bei einer geringeren Temperatur in die Rauchgasableitung 11 eintritt. Besonders wirksam läßt sich der Wärmeaustausch zwischen den beiden entgegengesetzt gerichteten Strömungsabschnitten des Rauchgases dadurch beeinflussen, daß im Inneren der zylinderförmigen Aussparung 3 im Bereich von deren Längsachse ein Strömungsverdrängungskörper 14 angeordnet wird, der sich etwa über die Länge des rohrförmigen Körpers 8 erstreckt und den aufwärts gerichteten Strömungsabschnitt des Rauchgasstromes in der Nähe der Innenoberfläche des rohrförmigen Körpers 8 hält. Die Strömungsgeschwindigkeit des aufwärts gerichteten Rauchgasstromes steigt entsprechend der Querschnittsverminderung an, so daß ein verbesserter Wärmeaustausch durch Konvektion zustandekommt.

Das aus der Brennkammer 16 entlang dem rohrförmigen Körper 8 nach oben strömende Rauchgas führt zu einer starken Erwärmung der Wand des rohrförmigen Körpers 8, wobei deren Temperatur mit zunehmender Höhe abnimmt. Daher ist die Wärmestrahlung der Wand des rohrförmigen Körpers 8 auf die Wand 4 des Reaktionsraums 1 im unteren Teil deutlich stärker als im oberen Teil. Dies führt zu einem weitgehenden Ausgleich der Temperatur in der Wand 4 über die Länge des Reaktionsraums 1, so daß sich auch im Inneren des Reaktionsraums 1 weitgehend isotherme Verhältnisse einstellen.

Um die Umlenkung der Rauchgasströmung am oberen Ende des rohrförmigen Körpers 8 zu erleichtern, ist der Reaktionsraum 1 auf der Innenseite oben mit einem etwa kuppelförmigen Boden 18 ausgeführt. Wegen der ständigen Wärmeabgabe im Bereich des aufwärts gerichteten Rauchgasstromes kann dessen Temperatur bis zum Erreichen des oberen Endes des rohrförmigen Körpers 8 und damit bis zum Erreichen des kuppelförmigen Bodens 18 gezielt mindestens so weit abgesenkt werden, daß der direkte Kontakt des Rauchgases mit der mechanisch belasteten Innenwand 4 des Reaktionsraums 1 nicht mehr zu thermischen Schädigungen führt.

Zur Verbesserung des thermischen Wirkungsgrades kann der Reaktor 5 außen mit einer Wärmeisolierung 17 versehen sein, die die Abstrahlungsverluste vermindert. Darüberhinaus empfiehlt es sich in manchen Fällen, in denen der Brenner ein Rauchgas mit sehr hoher Temperatur erzeugt, einen Teil des abgekühlten Rauchgases, das durch die Rauchgasableitung 11 abgeleitet wird, in den Brenner 19 bzw. in den Brennraum 16 zurückzuführen, um dort die Rauchgastemperatur zu vermindern. Wenngleich der Wärmeaustausch zwischen dem Rauchgas und dem Prozeßgas zweckmäßigerweise im Gegenstromverfahren durchgeführt wird, insbesondere, wenn die Vorwärmung des Prozeßgases nicht bis auf Reaktionstenperatur erfolgt, so ist es dennoch nicht ausgeschlossen, die Erfindung auch nach dem Gleichstromprinzip auszuführen. Vorteilhafterweise wird das Gehäuse im unteren Teil 13 des Reaktors 5 aus feuerfestem Material ausgeführt, ebenso der Strömungsverdrängungskörper 14, der als Vollstab oder auch als Rohr mit mindestens einem geschlossenen Ende ausgebildet sein kann. Für den Mantel 2, die Wände 4 und den rohrförmigen Körper 8 empfehlen sich metallische Werkstoffe.

In Figur 2 ist eine abgewandelte Ausführung der Erfindung dargestellt, wobei funktionsgleiche Teile mit den gleichen Bezugszeichen versehen wurden wie in Figur 1.

Der dort dargestellte Reaktor 5 weist mehrere zylinderförmige Aussparungen 3 auf, die parallel zueinander angeordnet und deren zylinderförmige Wände 8 jeweils gasdicht mit den Löchern eines Lochbodens 24 verbunden sind. Die in die Aussparungen 3 von unten koaxial eingeführten rohrförmigen Körper 8 sind jeweils gasdicht mit den Löchern eines zweiten Lochbodens 23 verbunden, der die Brennkammer 16 nach oben hin abschließt, so daß die heißen Rauchgase zwangsläufig durch die rohrfömigen Körper 8 nach oben steigen, an deren oberen Enden im Bereich der kuppelförmigen Böden 18 jeweils umgelenkt und durch die Ringspalte 9 nach unten geführt werden. Der Wärmeaustausch zwischen den Rauchgasströmungsabschnitten und dem Prozeßgas geschieht in gleicher Weise wie in Figur 1. Nach Durchströmen der Ringspalte 9 sammelt sich das abgekühlte Rauchgas in dem Raum zwischen den beiden Lochböden 23 und 24 und tritt dann durch die Rauchgasableitung 11 unten aus dem Gehäuse des Reaktors 5 heraus.

Die Erfindung bringt insbesondere folgende Vorteile mit sich: Der Reaktor ist äußerst einfach aufgebaut und verursacht daher vergleichsweise geringe Herstellkosten. Der Wärmestrom durch die Wand des

4

Reaktionsraums hindurch ist gleichmäßig und kann einem optimalen Höchstwert angenähert werden, der die thermische Belastbarkeit der verwendeten Werkstoffe vollständig berücksichtigt. Probleme infolge einer direkten Beaufschlagung mechanisch belasteter Teile durch eine offene Flamme oder zu heiße Rauchgase werden vermieden. Da die endotherme Reaktion praktisch unter isothermen Bedingungen stattfinden kann, ist eine hohe Effizienz des Reaktionsraumvolumens gesichert. Dank der dadurch möglichen vergleichsweise kleinen Bauweise bei vorgegebener Leistung lassen sich die Abstrahlungsverluste minimieren. Zur äußeren Wärmeisolierung sind keine feuerfesten Materialien erforderlich; diese empfehlen sich lediglich im Bereich der Rauchgaszu- und ableitung.

**Patentansprüche**

1. Verfahren zur indirekten Beheizung eines Prozeßgasstroms in einem Reaktionsraum für eine endotherme, insbesondere katalytische Reaktion, bei dem die Wände des Reaktionsraums an der außerhalb des Reaktionsraums gelegenen Oberfläche von einem heißen Rauchgas umströmt werden und die von den Wänden aufgenommene Wärme an das Prozeßgas abgegeben wird, wobei das heiße Rauchgas zunächst an einer aus einem wärmeleitenden und wärmebeständigen Material gebildeten Barriere unter Abgabe von Wärme an diese Barriere entlanggeführt wird, wobei ferner das Rauchgas nach Erreichen einer für die Wände des Reaktionsraums unschädlichen Temperatur umgelenkt und auf der gegenüberliegenden Seite der Barriere in entgegengesetzter Richtung weitergeführt und erst dabei in Kontakt mit der Außenseite der Wände des Reaktionsraums gebracht wird und wobei das in entgegengesetzter Richtung weitergeführte Rauchgas einerseits von der Barriere Wärme aufnimmt und andererseits Wärme an die Wände des Reaktionsraums abgibt, dadurch gekennzeichnet, daß das heiße Rauchgas vor seiner Umlenkung über die gesamte axiale Länge des Reaktionsraums an der Barriere entlanggeführt wird und die Strömungsgeschwindigkeiten des Rauchgasstromes in den Strömungsabschnitten vor und nach der Umlenkung unter Berücksichtigung sowohl des Wärmetauschs zwischen dem Rauchgas und dem Reaktionsraum als auch des durch die Barriere hindurch erfolgenden Wärmetauschs zwischen den entgegengesetzten Strömungsabschnitten des Rauchgases als auch des Wärmetauschs durch Wärmestrahlung zwischen der Barriere und den Wänden des Reaktionsraums so zueinander eingestellt werden, daß die Wärme aufnehmenden Wände des Reaktionsraums über die axiale Länge weitgehend gleiche Temperatur aufweisen.

2. Verfahren nach Anspruch 1, dadurch gekennzeichnet, daß der Prozeßgasstrom im Gegenstrom zu dem an den Wänden des Reaktionsraums entlanggeführten Rauchgasstrom geführt wird.

3. Reaktor für die Durchführung des Verfahrens nach Anspruch 1, mit einem Reaktionsraum (1), der außen von einem zylindrischen Mantel (2) eingeschlossen und in dem mindestens eine sich im wesentlichen über die Länge des Reaktionsraums (1) sich erstreckende und parallel zu dessen Längsachse gerichtete zylindrische Aussparung (3) gebildet ist, die jeweils durch eine innere Wand (4) aus einem gut wärmeleitenden Material von dem Reaktionsraum (1) abgetrennt ist, mit einer an einem Ende (13) des Reaktors (5) angeordneten Prozeßgaszuleitung (6) zum Reaktionsraum (1) und einer an einem Ende (12) des Reaktors (5) angeordneten Produktgasableitung (7) aus dessen Reaktionsraum (1), mit jeweils einem zu der oder den Aussparungen (3) koaxialen rohrförmigen Körper (8), der einen Ringspalt (9) mit der inneren Wand (4) des Reaktionsraums (1) bildet, und mit einer Rauchgaszuleitung (10) und einer Rauchgasableitung (11), die mit dem Ringspalt (9) in Verbindung stehen, dadurch gekennzeichnet, daß der rohrförmige Körper (8) sich jeweils innerhalb der zylindrischen Aussparung (3) über nahezu die gesamte Länge des Reaktionsraums (1) erstreckt, daß die Prozeßgaszuleitung (6) und die Produktgasableitung (7) an gegenüberliegenden Enden (13, 12) des Reaktors (5) angeordnet sind, daß die Rauchgaszuleitung (10) und die Rauchgasableitung (11) am gleichen Ende (13) des Reaktors (5) angeordnet sind, daß die Rauchgaszuleitung (10) unmittelbar in das Innere des rohrförmigen Körpers (8) geführt ist und daß der Ringspalt (9) an dem der Rauchgaszuleitung (10) gegenüberliegenden Ende (12) zum Inneren des rohrförmigen Körpers (8) offen ist.

4. Reaktor nach Anspruch 3, dadurch gekennzeichnet, daß die Produktgaszuleitung (6) an dem Ende (13) des Reaktors (5) angeordnet ist, an dem sich die Rauchgaszu- und -ableitung (10,11) befinden.

5. Reaktor nach Anspruch 3 oder 4, dadurch gekennzeichnet, daß im Inneren des rohrförmigen Körpers (8) ein koaxialer Strömungsverdrängungskörper (14) für das heiße Rauchgas angeordnet ist.

6. Reaktor nach einem der Ansprüche 3 bis 5, dadurch gekennzeichnet, daß die Zuleitung (10) für das heiße Rauchgas als Brennkammer (16) mit feuerfesten Wänden (15) ausgebildet ist.

7. Reaktor nach Anspruch 6, dadurch gekennzeichnet, daß die Ableitung (11) des abgekühlten Rauchgases eine Leitungsverbindung zur Brennkammer (16), über die ein Teilstrom des Rauchgases in die Brennkammer (16) rückführbar ist, aufweist.

8. Reaktor nach einem der Ansprüche 3 bis 7, dadurch gekennzeichnet, daß der Reaktionsraum (1) außen mit einer Wärmeisolierung (17) versehen ist.

9. Reaktor nach einem der Ansprüche 3 bis 8, dadurch gekennzeichnet, daß der Reaktor (5) in stehender Bauart ausgeführt ist.

10. Reaktor nach Anspruch 9, dadurch gekennzeichnet, daß das Reaktorende (13) mit der Rauchgaszu- (10) und -ableitung (11) unten angeordnet ist.

11. Reaktor nach einem der Ansprüche 3 bis 10, dadurch gekennzeichnet, daß der Reaktionsraum (1) im Bereich der offenen Verbindungsstelle zwischen dem Ringspalt (9) und dem Inneren des rohrförmigen Körpers (3) eine kuppelförmige Wand (18) aufweist.

## Claims

1. Method for indirectly heating a process gas stream in a reaction space for an endothermic, in particular catalytic reaction, in which a hot burnt gas flows around the walls of the reaction space at the surface which is disposed outside the reaction space and the heat absorbed by the walls is delivered to the process gas, the hot burnt gas initially being conveyed along a barrier, which is formed from a heat-conducting and heatproof material, while delivering heat to this barrier, and, after reaching a temperature which is harmless to the walls of the reaction space, being deflected and conveyed further in the opposite direction on the opposite side of the barrier, after which it is brought into contact with the outside of the walls of the reaction space, and the burnt gas which is conveyed further in the opposite direction absorbing heat from the barrier on one side and delivering heat to the walls of the reaction space on the other, characterised in that the hot burnt gas is conveyed along the barrier over the entire axial length of the reaction space before being deflected and, taking account of the heat exchange between the burnt gas and the reaction space, the heat exchange between the opposite flow sections of the burnt gas, which takes place through the barrier, as well as the heat exchange by heat radiation between the barrier and the walls of the reaction space, the flow speeds of the burnt gas stream in the flow sections before and after the deflection are adapted to one another such that the walls of the reaction space which absorb heat are substantially of the same temperature over the axial length.

2. Method according to claim 1, characterised in that the process gas stream is conveyed in counterflow to the burnt gas stream which is conveyed along the walls of the reaction space.

3. Reactor for carrying out the method according to claim 1, with a reaction space (1), which is enclosed by a cylindrical shell (2) and in which at least one cylindrical cavity (3) is formed, which cavity extends essentially over the length of the reaction space (1), is directed parallel to the latter's longitudinal axis and is in each case separated from the reaction space (1) by an inner wall (4) of an efficiently heat-conducting material, with a process gas inlet (6), which is arranged at one end (13) of the reactor (5), to the reaction space (1) and a product gas outlet (7), which is arranged at one end (12) of the reactor (5), from the latter's reaction space (1), with a respective tubular member (8), which is coaxial with the cavity or cavities (3) and which forms an annular gap (9) with the inner wall (4) of the reaction space (1), and with a burnt gas inlet (10) and a burnt gas outlet (11), which communicate with the annular gap (9), characterised in that the tubular member (8) in each case extends inside the cylindrical cavity (3) over almost the entire length of the reaction space (1), that the product gas inlet (6) and the product gas outlet (7) are arranged at opposite ends (13, 12) of the reactor (5), that the burnt gas inlet (10) and the burnt gas outlet (11) are arranged at the same end (13) of the reactor (5), that the burnt gas inlet (10) leads directly into the tubular member (8), and that the annular gap (9) is open towards the inside of the tubular member (8) at the end (12) which is opposite the burnt gas inlet (10).

4. Reactor according to claim 3, characterised in that the product gas inlet (6) is arranged at the end (13) of the reactor (5) at which the burnt gas inlet and outlet (10, 11) are disposed.

5. Reactor according to claim 3 or 4, characterised in that a coaxial flow displacement member (14) for the hot burnt gas is arranged inside the tubular member (8).

6. Reactor according to one of claims 3 to 5, characterised in that the inlet (10) for the hot burnt gas is formed as a combustion chamber (16) with refractory walls (15).

7. Reactor according to claim 6, characterised in that the outlet (11) for the cooled burnt gas comprises a conduit connection to the combustion chamber (16), via which some of the burnt gas stream can be returned to the combustion chamber (16).

8. Reactor according to one of claims 3 to 7, characterised in that the reactor space (1) is provided on the outside with a heat insulation (17).

9. Reactor according to one of claims 3 to 8, characterised in that the reactor (5) is of the upright type.

10. Reactor according to claim 9, characterised in that the reactor end (13) with the burnt gas inlet (10) and outlet (11) is arranged at the bottom.

11. Reactor according to one of claims 3 to 10, characterised in that the reaction space (1) has a cupola-shaped wall (18) in the area of the open junction point between the annular gap (9) and the inside of the tubular member (8).

## Revendications

1. Procédé pour le chauffage indirect d'un courant gazeux dans un espace réactionnel pour une réaction endothermique, en particulier catalytique, dans lequel les parois de l'espace réactionnel sont parcourues par un gaz de fumée chaud sur la surface s'étendant à l'extérieur de l'espace réactionnel et la chaleur reçue par les parois est fournie au gaz du procédé, le gaz de fumée chaud étant tout d'abord guidé le long d'une barrière formée par un matériau conduisant la chaleur et résistant à la chaleur, de la chaleur étant fournie à cette barrière, le gaz de fumée, après avoir atteint une température inoffensive pour les parois de l'espace réactionnel, étant ensuite changé de direction et guidé, en sens inverse, sur le côté opposé de la barrière, et amené alors en contact avec la face externe des parois de l'espace réactionnel, et le gaz de fumée guidé en sens inverse recevant, d'une part, de la chaleur de la barrière et fournissant, d'autre part, de la chaleur aux parois de l'espace réactionnel, caractérisé en ce que le gaz de fumée chaud, avant son changement de direction, est guidé le long de la barrière sur toute la longueur axiale de l'espace réactionnel, et les vitesses d'écoulement du courant de gaz de fumée, dans les tronçons d'écoulement avant et après le changement de direction, sont réglées l'une par rapport à l'autre, en tenant compte aussi bien de l'échange thermique entre le gaz de fumée et l'espace réactionnel que de l'échange thermique ayant lieu à travers la barrière entre les tronçons d'écoulement opposés du gaz de fumée et que de l'échange thermique par rayonnement thermique entre la barrière et les parois de l'espace réactionnel, de sorte que les parois de l'espace réactionnel, recevant de la chaleur présentent, sur leur longueur axiale, sensiblement la même température.

2. Procédé selon la revendication 1, caractérisé en ce que le courant gazeux du procédé est guidé à contre-courant du courant de gaz de fumée guidé le long des parois de l'espace réactionnel.

3. Réacteur pour la mise en oeuvre du procédé selon la revendication 1, comportant un espace réactionnel (1) qui, extérieurement, est enfermé par une enveloppe cylindrique (2) et dans lequel est formé au moins un évidement cylindrique (3) orienté parallèlement à son axe longitudinal et s'étendant généralement sur la longueur de l'espace réactionnel (1), qui, à chaque fois, est séparé de l'espace réactionnel (1) par une paroi interne (4) en un matériau bon conducteur de la chaleur, et comportant une conduite d'amenée (6) du gaz du procédé vers l'espace réactionnel (1), agencée à une extrémité (13) du réacteur (5), et une conduite d'évacuation (7) du gaz produit de l'espace réactionnel (1), agencée à une extrémité (12) du réacteur (5), avec, à chaque fois, un corps tubulaire (8) coaxial à l'évidement ou aux évidements (3), qui forme une fente annulaire (9) avec la paroi interne (4) de l'espace réactionnel (1), et une conduite d'amenée (10) du gaz de fumée et une conduite d'évacuation (11) du gaz de fumée, qui sont reliées à la fente annulaire (9), caractérisé en ce que le corps tubulaire (8) s'étend, à chaque fois, à l'intérieur de l'évidement cylindrique (3) sur pratiquement la longueur totale de l'espace réactionnel (1), en ce que la conduite d'amenée (6) du gaz du procédé et la conduite d'évacuation (7) du gaz produit sont agencées aux extrémités opposées (13,12) du réacteur (5), en ce que la conduite d'amenée (10) du gaz de fumée et la conduite d'évacuation (11) du gaz de fumée sont agencées à la même extrémité (13) du réacteur (5), en ce que la conduite d'amenée (10) du gaz de fumée est guidée directement à l'intérieur du corps tubulaire (8), et en ce que la fente annulaire (9) est ouverte à l'extrémité (12), opposée à la conduite d'amenée (10) du gaz de fumée, vers l'intérieur du corps tubulaire (8).

4. Réacteur selon la revendication 3, caractérisé en ce que la conduite d'amenée (6) du gaz du procédé est agencée à l'extrémité (13) du réacteur (5), au niveau de laquelle se trouvent la conduite d'amenée (10) et la conduite d'évacuation (11) du gaz de fumée.

5. Réacteur selon la revendication 3 ou 4, caractérisé en ce que, à l'intérieur du corps tubulaire (8), est agencé un corps coaxial (14) de refoulement de l'écoulement pour le gaz de fumée chaud.

6. Réacteur selon une des revendications 3 à 5, caractérisé en ce que la conduite d'amenée (10) pour le gaz de fumée chaud est réalisée en tant que chambre de combustion (16) à parois réfractaires (15).

7. Réacteur selon la revendication 6, caractérisé en ce que la conduite d'évacuation (11) du gaz de fumée refroidi présente un raccordement de conduite à la chambre de combustion (16), grâce auquel une partie du courant du gaz de fumée peut être ramenée dans la chambre de combustion (16).

8. Réacteur selon une des revendications 3 à 7, caractérisé en ce que l'espace réactionnel (1) est muni, extérieurement, d'une isolation thermique (17).

9. Réacteur selon une des revendications 3 à 8, caractérisé en ce que le réacteur (5) est agencé verticalement.

10. Réacteur selon la revendication 9, caractérisé en ce que l'extrémité (13) du réacteur est agencée en bas, avec la conduite d'amenée (10) et la conduite d'évacuation (11) du gaz de fumée.

11. Réacteur selon une des revendications 3 à 10, caractérisé en ce que l'espace réactionnel (1) présente une paroi (18) en forme de coupole dans la zone de jonction ouverte entre la fente annulaire (9) et l'intérieur du corps tubulaire (8).

F i g.1

Fig.2